# EUROPÄISCHE PATENTSCHRIFT

(11) **EP 0 611 420 B1**
(45) Veröffentlichungstag und Bekanntmachung des Hinweises auf die Patenterteilung: **29.03.1995**
(21) Anmeldenummer: 92920402.2
(22) Anmeldetag: 25.09.1992
(51) Int. Cl.: F16D 59/02, F16D 65/21, H02K 7/102

(54) **WARTUNGSFREIE, ELEKTROMAGNETISCH LÜFTBARE FEDERDRUCKBREMSE MIT NEUARTIGER ELEKTRISCHER ANSTEUERUNGSSCHALTUNG FÜR DIE MAGNETSPULE**
MAINTENANCE-FREE, ELECTROMAGNETICALLY RELEASABLE SPRING PRESSURE BRAKE WITH A NEW TYPE OF ELECTRIC DRIVING CIRCUIT FOR THE MAGNET COIL
FREIN A PRESSION DE RESSORT SANS ENTRETIEN, POUVANT ETRE DESSERRE ELECTROMAGNETIQUEMENT, AVEC UN NOUVEAU CIRCUIT ELECTRIQUE DE COMMANDE POUR LA BOBINE MAGNETIQUE

(30) Priorität: 11.11.1991 DE 9113982 U
(43) Veröffentlichungstag der Anmeldung: 24.08.1994
(73) Patentinhaber: Chr. Mayr GmbH & Co. KG, D-87665 Mauerstetten (DE)
(72) Erfinder: SCHILLING, Karl, D-87616 Marktoberdorf (DE); EIBAND Karl,, D-87616 Marktoberdorf (DE); RIEDELBECK, Stefan, D-87600 Kaufbeuren (DE)
(74) Vertreter: Ruschke, Hans Edvard, Dipl.-Ing.
(86) Internationale Anmeldenummer: EP9202220
(87) Internationale Veröffentlichungsnummer: WO9310368

(56) Entgegenhaltungen:
- AT-B- 323 483
- DE-A- 2 820 204
- DE-A- 3 906 069
- DE-C- 1 914 469
- Patent Abstracts of Japan, Band 13, Nr 420, M872, Zusammenfassung von JP 01-158237, publ 1989-06-21

## Beschreibung

Die vorliegende Erfindung betrifft die wartungsfreie elektromagnetisch lüftbare Federdruckbremse nach dem Oberbegriff des Patentanspruchs 1.

Derartige elektormagnetische Federdruckbremsen, bei denen eine durch Federdruck angepreßte Ankerscheibe einen Reibbelagrotor (Bremsscheibe) festhält, sind im Stand der Technik vielfach bekannt. Zum Lösen oder "Lüften" der Bremse wird ein Elektromagnet benötigt, der die erwähnte Ankerscheibe gegen den Federdruck vom Reibbelagrotor wegzieht. Beim Anschalten des Stroms wird die Ankerscheibe freigegeben und bewegt sich infolge der Federkraft gegen den Reibbelagrotor (Bremsscheibe), der gegen eine feststehende Fläche gepreßt wird. Hierdurch wird das Bremsmoment am Reibbelagrotor erzeugt. Bei diesem Einfallen der Federdruckbremse entsteht zwischen dem Spulenträgergehäuse der Federdruckbremse und der Ankerscheibe ein Luftspalt, der im Standardfall 0,2 - 0,4 mm (Nennzustand) groß ist und sich mit zunehmendem Abnutzungsgrad des Reibbelagrotors vergrößert. Da ein vergrößerter Luftspalt mit seinem erhöhten magnetischen Widerstand dazu führen kann, daß die elektrische Leistung der Magnetspule nicht mehr dazu ausreicht, die Bremse zu lüften, wird bei den meisten Federdruckbremsen eine mechanische Nachstellung des Luftspaltes vorgesehen, d.h. es werden entsprechende konstruktive Lösungen verwirklicht, mit deren Hilfe die abnutzungsbedingte Vergrößerung des Luftspaltes wieder kompensiert werden kann, um die Lüftzeit der Bremse innerhalb vorgegebener Grenzen zu halten.

Eine solche Luftspaltnachstellung ist jedoch konstruktiv relativ aufwendig und erhöht damit die Herstellungskosten der Federdruckbremse. außerdem macht sie eine regelmäßige Wartung der Bremse erforderlich, was in vielen Einsatzfällen nicht gewünscht ist.

Im Stand der Technik ist es bereits bekannt, Federdruckbremsen der hier in Rede stehenden Art ohne Luftspaltnachstellung auszubilden und zur Überbrückung eines sich allmählich einstellenden erheblichen Luftspaltes zwischen der Ankerscheibe und dem Spulenträgergehäuse eine starke Übererregung der Magnetspule zu Beginn des Lüftens der Bremse vorzusehen, wobei diese Übererregung und die Zurückregelung nach dem Lüften der Bremse auf einen niedrigen Wert durch aufwendige Steuergeräte erreicht wird.

Es ist die Aufgabe der vorliegenden Neuerung, eine wartungsfreie, geschlossene, besonders einfach aufgebaute und somit preisgünstige Federdruckbremse mit geringer Wärmebelastung vorzusehen, die dennoch kurze Anzugszeiten für das Lüften und kurze Abfallzeiten für das Einfallen der Bremse aufweist, auch wenn keine mechanische Vorrichtungen für das Nachstellen des Luftspaltes vorgesehen sind. Trotzdem soll ein günstiges Abnutzungsverhalten der Bremse erreicht werden, d.h., das Lüften und Abfallen der Bremse soll auch bei einem großen Zugweg/Luftspalt an der Ankerscheibe im wesentlichen unverändert bleiben.

Diese Aufgabe wird durch die Lehre des Anspruches 1 gelöst. Indem die neuartige Ansteuerschaltung für die Magnetspule ohne Transformator und Relais vorgesehen wird, kann eine preisgünstige und platzsparende Federdruckbremse vorgesehen werden, die über eine lange Einsatzzeit wartungsfrei arbeitet und sich durch relativ geringe Leistungsaufnahme bei günstigen Ansprechzeiten der Federdruckbremse auszeichnet.

Aus der AT-B-323 483 ist eine Schaltungsanordnung für gleichstromerregte Magentsysteme zum Lüften federbetätigter Bremsen und Kupplungen bekannt, bei denen der sich durch Verschleiß vergrößernde Luftspalt nicht durch eine mechanische Nachstellvorrichtung konstant gehalten wird sondern der durch den Verschleiß größer gewordenen Luftspalt durch eine erhöhte Magnetkraft überwunden und anschließend durch eine relativ geringe Magnetkraft die Bremse oder Kupplung offengehalten wird. Dabei weist der Elektromagnet eine Haltespule und zusätzlich zum Lösen der Bremse oder Kupplung eine Anzugsspule auf. Die elektrische Steuerung erfolgt mittels einer Phasenschnittsteuerung und einer Einrichtung zur Erzeugung einer Übererregung.

Bei der Schalteinrichtung für Wechselstromschütze mit Haltegleichstrom nach der DE-AS 13 00 612 wird zunächst der Elektromagnet eines Wechselstrommagneten von Wechselstrom erregt, so daß der Anker angezogen wird. Dabei wird durch mechanische Mittel der Wechselstrom abgeschaltet und dafür Gleichstrom zugeschaltet, der aus dem Wechselstromnetz über einen Transformator und einen Gleichrichter geliefert wird. Der Gleichstrom ist so bemessen, daß er den ohnehin in Bewegung befindlichen Anker weiter anzieht und die geforderte Haltekraft erzeugt.

Die DE-OS 14 63 880 zeigt einen Asynchronmotor mit einer elektromagnetisch lüftbaren Bremse, bei dem der Bremslüftmagnet gegenüber einem Einschaltschütz für eine niederere Spannung ausgelegt ist, so daß er beim Einschalten stärker und schneller erregt wird als das Einschaltschütz und ein Stromwandler mit seiner Primärseite im Stromkreis der Motorwicklung und mit seiner Sekundärseite im Stromkreis des Bremslüftmagneten angeordnet und so bemessen ist, daß er nach Einschalten der Phasenwicklungen die Spannung im Stromkreis des Bremslüftmagneten herabsetzt.

Aus der US-PS 34 00 797 geht eine elektromagnetisch lüftbare Federdruckbremse oder -kupplung als bekannt hervor, die ein konzentrisch zur Welle angeordnetes mitdrehendes Spulenträgergehäuse mit mehreren, vorzugsweise zwei, ringförmigen Magnetspulen darin ebenfalls konzetrisch zur Welle aufweist mit einem ersten Kupplungs- bzw. Bremsglied mit stirnseitiger Verzahnung und einem zweiten Kupplungs- bzw. Bremsglied mit dazu passender Verzahnung, welches Glied gleichzeitig der Magnetanker ist, und mit in dem Spulenträgergehäuse angeordneten Federn, die das Magnetanker-Glied entgegen der Kraft der Magnetspulen axial in Richtung auf das erste Glied beaufschlagen, um bei stromlosen Magentspulen die Verzahnung der beiden Kupplungs-bzw, Bremsglieder in Eingriff miteinander zu halten, und mit einer elektrischen Steuerschaltung für die Magnetspulen zum Ansteuern derselben beim Lüften der Kupplung bzw. Bremse mit einer Leistung, die gegenüber dem normalen Halten der Kupplung bzw. Bremse in der gelösten Stellung stark erhöht ist. Beim Lösen der Kupplung bzw. Bremse werden alle Spulen erregt, um die erforderliche Anzugskraft zu erzeugen, während zum Halten in der gelösten Stellung nur die Haltespule erregt bleibt.

Ein Ausführungsbeispiel der erfindungsgemäßen Federdruckbremse wird unter Bezugnahme auf die beigefügten Zeichnungen beschrieben. In diesen zeigt die
- Fig. 1: einen Schnitt durch die erfindungsgemäße Federdruckbremse, während die
- Fig. 2: die neuartige elektronische Steuerung für die Magnetspule zum Ansteuern derselben zeigt.

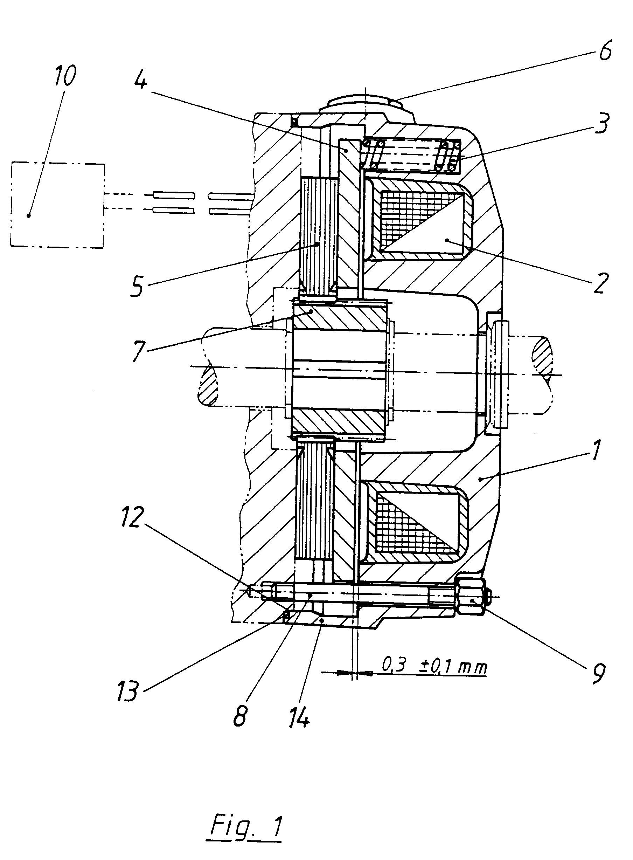

In Fig. 1 sitzt auf der abzubremsenden Welle in üblicher Weise eine Nabe 7, auf der axial verschiebbar aber drehstarr der Reibbelagrotor 5 angeordnet ist, etwa mittels einer außen auf der Nabe 7 angeordneten Umfangsverzahnung, in die eine entsprechend ausgebildete Innenverzahnung in der zentralen Mittelöffnung des Reibbelagrotors 5 eingreift.

Konzentrisch zu der Welle ist auch der im wesentlichen rotationssymmetrisch ausgebildete Spulenträger 1 mit der darin vorgesehenen Magnetspule 2 angeordnet. Zwischen der dem Reibelagrotor 5 zugewandten axialen Stirnfläche des Spulenträgers 1 und dem Reibbelagrotor 5 ist eine axial verschiebbare, jedoch drehstarr mit dem Spulenträger verbundene Ankerscheibe 4 vorgesehen, die bei eingeschalteter Magnetspule 2 entgegen der Kraft der Druckfedern 3 gegen das Spulenträgergehäuse angezogen wird. Beim Abschalten des Stromes wird die Ankerscheibe 4 gegen den Reibbelagrotor 5 gedrückt, der sich seinerseits an ein Wellengehäuse oder Lagerschild einer abzubremsenden Vorrichtung anlegt und somit die Nabe 7 und damit die Welle abbremst.

Das Spulenträgergehäuse 1 ist mit Hilfe von Stiftschrauben 8 in Verbindung mit entsprechenden Sechskantmuttern 9 am vorgenannten, Wellengehäuse einer abzubremsenden Vorrichtung oder am Lagerschild eines Elektromotors befestigt, und zwar über einen Zentrierbund 12 am stirnseitigen Ende des Distanzbundes 14, der einstückig mit der äußeren Umfangsfläche des Spulenträgergehäuses ausgebildet ist und so für eine weitgehend geschlossene Ausführung mit guten Abdichtungsmöglichkeiten sorgt. Einerseits wird durch die Stiftschrauben 8 der Spulenträger 1 in Verbindung mit den Sechskantmuttern 9 am Wellengehäuse oder Lagerschild eines Elektromotors festgelegt, andererseits dienen die Stiftschrauben 8 gleichzeitig dazu, die Ankerscheibe 4 axial verschiebbar, aber in Umfangsrichtung unverschiebbar innerhalb des Spulenträgergehäuses bzw. des sich daran anschließenden Distanzbundes 14 anzuordnen.

Je nach dem benötigten Bremsmoment der Federdruckbremse können unterschiedliche Druckfedern 3 in den Spulenträger 1 eingesetzt werden. Natürlich ist eine Anzahl solcher Druckfedern 3 auf dem Umfang verteilt angeordnet, auch wenn im Schnittbild der Fig. 1 nur eine solche Druckfeder 3 gezeigt ist; dies gilt sinngemäß auch für die Stiftschraube 8 bzw. die Sechskantmutter 9.

Im Bereich des Überganges zwischen dem Spulenträgergehäuse 1 und dem Distanzbund 14 ist eine radiale Bohrung 6 zur Luftspaltkontrolle vorgesehen. Diese Luftspaltkontrollöffnung wird durch eine Verschraubung bzw. einen Stopfen jeweils mit Panzergewinde (PG) verschlossen. Panzergewinde ist üblich für "elektrische Anschlüsse".

Im Falle einer sehr weitgehenden Abnutzung des Reibbelagrotors wird ein neuer Reibbelagrotor eingesetzt, wobei eine Luftspalteinstellung nicht erforderlich ist, da der sogenannte "Nennluftspalt" durch die Teilefertigung entsteht.

Die Stromzuführung zur Magnetspule 2 erfolgt über das Lagerschild, an das die Federdruckbremse angeflanscht wird. Die entsprechenden Litzen werden also durch dieses Lagerschild zu der Steuerschaltung 10 geführt, wie dies in Fig. 1 schematisch angedeutet ist.

Durch die einteilige Ausführung des Spulenträgergehäuses 1 (z.B. als Gußteil) mit dem Zentrierbund 12 und der O-Ring-Stufe 13, der verschließbaren Luftspaltkontrollbohrung 6 mit PG-Verschraubung/-Stopfen, sowie durch die Litzenführung von der Magnetspule 2 über das Lagerschild und die sonst geschlossene Ausführung ist eine gute Abdichtung auf die Schutzart IP64 ohne zusätzlichen Aufwand möglich. Zu diesem Zweck muß nur der Wellendurchgang des Spulenträgers 1 mit einem geeigneten Dichtelement (Beispiel V-Ring) versehen und ein O-Ring in die Stufe der Anbauzentrierung 13 eingelegt werden.

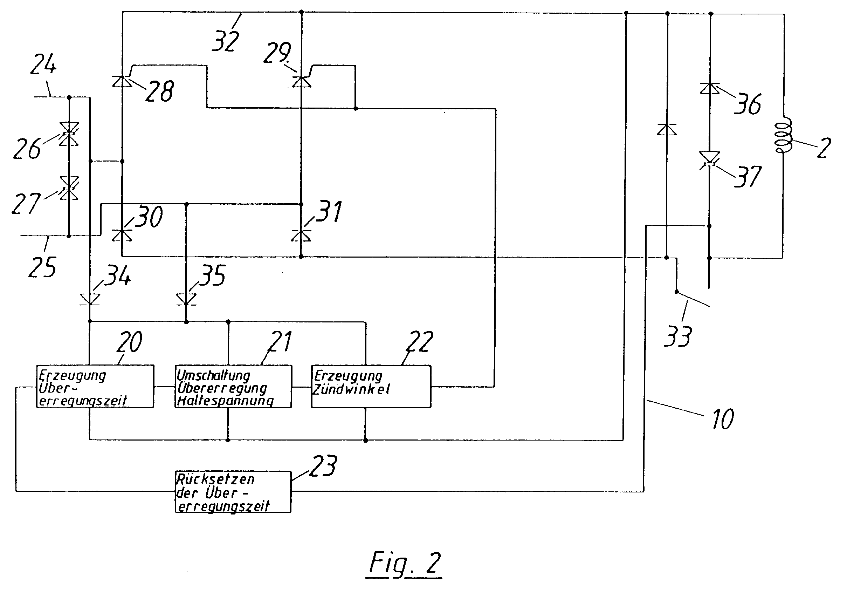

Um die Bremse für ein besonders günstiges Abnützungsverhalten angesichts des Verzichts auf eine mechanische Nachstellung des Luftspaltes einzurichten, ist vorgesehen, daß die Federdruckbremse den maximal möglichen Bremsendruchmesser am Lagerschild ausnutzt, an den sie angeflanscht ist, also die größtmögliche Reibfläche bzw. den größtmöglichen Reibdurchmesser, was zu dem maximalen Bremsmoment bei geringstmöglichen Andruckkräften führt. Besonders wichtig ist in diesem Zusammenhang jedoch auch, daß die Magnetspule 2 einen besonders großen Luftspalt bzw. Zugweg überbrücken kann, was durch die Magnetspule 2 im Zusammenhang mit einer neuartigen Phasengleichrichter-Steuerschaltung 10 mit Überspannungsschutzdioden und verbesserter Spannungsstabilität erreicht wird. Auf diese Steuerschaltung 10 wird weiter unten im Zusammenhang mit der Erläuterung der Fig. 2 näher eingegangen. Bereits an dieser Stelle sei jedoch schon hervorgehoben, daß zum Überwinden des ungewöhnlich großen zulässigen Luftspaltes dieser Federdruckbremse eine erhebliche Übererregung der Magnetspule 2 für beispielsweise 100 msec erzeugt wird, um die Bremse zu lüften, um nach Ablauf der Übererregungszeit bzw. nach dem Lüften eine niedrigere Haltespannung durch eine Phasenanschnittsteuerung anzulegen. Diese niedrigere Haltespannung (in der Regel die halbe Spulennennspannung = ein Viertel der Leistung an der Spule) reicht nach dem Verschwinden des Luftspaltes aufgrund der Axialbewegung der Ankerscheibe 4 gerade zum Halten der Bremse in der gelösten Stellung aus und vermeidet somit eine übermäßige Erwärmung der Bremse aufgrund einer sonst zu hohen Leistungsaufnahme der Magnetspule 2. Beim Einfallen der Bremse wird der Phasengleichrichter gleichstromseitig abgeschaltet, d.h. die Magnetspule 2 wird stromlos, und da diese Abschaltung von der verhältnismäßig niedrigen Haltespannung ausgeht, wird auch das Magnetfeld in der kürzestmöglichen Zeit zusammenbrechen, d.h., daß die Ansprechzeit der Bremse hierdurch so kurz wie möglich gehalten wird.

Der Phasengleichrichter ist für Spannungen von 110 - 500 Volt Wechselspannung ausgelegt, wobei die Magnetspule der jeweiligen Netzspannung angepaßt wird. Es gibt aber auch die Möglichkeit, mit verschiedenen Phasengleichrichtern (je nach Netzspannung) immer die gleiche Spule zu verwenden (Anpassung der Gleichrichter an die Netzspannung). Durch diese Möglichkeiten in der Steuerschaltung 10 ist die Federdruckbremse praktisch weltweit einsetzbar. Eine eingebaute Spannungsstabilisierung bewirkt eine wesentliche Verbesserung der Spannungsstabilität im angegebenen Spannungsbereich. Die Steuerschaltung 10 ist so eingerichtet, daß eine Begrenzung der Induktionsspannung durch Überspannungsschutzdioden erfolgt.

Die Umschaltung zwischen der Übererregung und der Haltespannung wird ohne Transformator und Relais erzeugt und ist damit platz- und preissparend. Es sind keine Bauteile eingebaut, die zu einer Erwärmung des Gleichrichters führen.

Nachfolgend wird die Steuerschaltung der Fig. 2 im einzelnen näher erläutert: Diese weist eine Einrichtung 20 zur Generierung der Übererregungszeit, eine Einrichtung 21 zum Umschalten von der Übererregung auf die Haltespannung und eine Schaltung 22 zur Erzeugung des Zündwinkels auf. Eine weitere Einrichtung 23 dient dazu, die Einrichtung 20 zur Generierung der Übererregungszeit zurückzusetzen und die Steuerschaltung 10 für ein sehr schnelles Takten wieder auf den Grundzustand zu bringen.

Die Netzspannung liegt an den Anschlüssen 24, 25 an. Dazwischen geschaltete Dioden 26, 27 dienen dazu, hohe Spannungsspitzen an den Anschlüssen 24, 25, die die Steuerschaltung 10 zerstören könnten, zu begrenzen. Den Anschlüssen 24, 25 ist eine Phasenanschnittschaltung 32 nachgeschaltet, die aus den Thyristoren 28, 29 und den Dioden 30, 31 besteht. Die Thyristoren 28, 29 werden von der Schaltung 22, zur Erzeugung der Zündwinkel gesteuert. Am Ausgang der Phasenanschnittsschaltung 32 liegt die Magnetspule 2 der vorliegenden Federdruckbremse, wobei zu dieser ein EIN/AUS-Schalter 33 in Reihe geschaltet ist.

Die Versorgung der genannten Einrichtungen 20, 21 sowie der Schaltung 22 erfolgt über die Dioden 34, 35, die zwischen die einen Versorgungsanschlüsse der Einrichtungen 20 und 21 und der Schaltung 22 und die Anschlüsse 24 und 25 in der ersichtlichen Weise geschaltet sind. Die anderen Versorgungsanschlüsse der Einrichtung 20 und 21 sowie der Schaltung 22 sind mit dem entsprechenden Ausgang der Phasenanschnittsschaltung 32 verbunden.

Parallel zur Magnetspule 2 ist eine die Induktionsspannung derselben begrenzende Diodenanordnung, die aus zwei gegensinnig in Reihe geschalteten Dioden 36, 37 besteht, begrenzt.

Nach dem Anschalten der Steuerschaltung 10 an die Netzspannung und dem Schließen des Schalters 33 wird an die Magnetspule 2 eine bestimmte Zeit (.z.B. 100 msec) lang eine Übererregungsspannung angelegt. Die genannte Zeit wird durch die Einrichtung 20 zur Erzeugung der Übererregungszeit bestimmt. Diese enthält zu diesem Zweck vorzugsweise ein RC-Glied. Nach Ablauf dieser Zeit schaltet die Einrichtung 20 die Einrichtung 21 zum Umschalten von der Übererregung auf die Haltespannung um, die ihrerseits die Schaltung 22 zur Erzeugung des Zündwinkels betätigt.

Zum Einfallen der Bremse wird der Schalter 33 geöffnet. Die Magnetspule 2 wird dann schnell entregt, wobei die entsprechende Induktionsspannung durch die Dioden 36, 37 begrenzt wird. Durch die Induktionsspannung wird die Einrichtung 23 zum Rücksetzen der Übererregungszeit erregt, die die Kapazitäten in der Einrichtung 20 zum Erzeugen der Übererregungszeit entlädt. Beim erneuten Einschalten durch Betätigen des Schalters 33 werden dann die Kapazitäten in der Einrichtung 20 zur Bestimmung der Übererregungszeit durch Einschalten derselben erneut geladen.

Die Federdruckbremse kann so gestaltet sein, daß die Phasenanschnittsteuerung 32 an die jeweilige lokale Netzspannung (110 - 440 V) angepaßt ist, wobei dann dieselben Magnetspulen 2 für alle möglichen Netzspannungen verwendbar sind. Dies hat den Vorteil, daß die Bremse mit der Magnetspule als gleichbleibende Einheit hergestellt und gelagert werden kann. Zur Anpassung an die lokalen Netzspannungen muß dann lediglich eine entsprechende Phasenanschnittsteuerung 32 mit der Bremse verschaltet werden. Umgekehrt ist es jedoch auch denkbar, die Magnetspulen 2 an die jeweilige lokale Netzspannung anzupassen und dieselben Phasenanschnittsteuerungen für alle möglichen Spannungen vorzusehen.

## Patentansprüche

1. Elektromagnetisch lüftbare Federdruckbremse,
- mit einem konzentrisch zur abzubremsenden Welle angeordneten feststehenden Spulenträgergehäuse (1) mit einer ringförmigen Magnetspule (2) darin, die ebenfalls konzentrisch zur Welle angeordnet ist,
- mit einem mit der zu bremsenden Welle über eine Nabe (7) drehstarr verbundenen, aber axial verschieblichen Reibbelagrotor (5),
- mit einer radial sich erstreckenden, axial zwischen dem Reibbelagrotor (5) und dem Spulenträgergehäuse (1) unverdrehbar angeordneten, aber axial verschieblichen Ankerscheibe (4),
- mit in dem Spulenträgergehäuse (1) angeordneten Druckfedern (3), die die Ankerscheibe (4) entgegen der Kraft der Magnetspule (2) axial in Richtung auf den Reibbelagrotor beaufschlagen, um bei stromloser Magnetspule den Reibbelag zum Bremsen gegen ein Wellengehäuse oder Lagerschild zu drücken, an dem das Spulenträgergehäuse (1) befestigt ist,
- und mit einer elektrischen Steuerschaltung (10) für die Magnetspule (2) zum Ansteuern derselben beim Lüften der Bremse mit einer Leistung, die gegenüber dem normalen Halten der Bremse in der gelösten Stellung stark erhöht ist,
dadurch gekennzeichnet, daß die Steuerschaltung (10) eine Phasenanschnittssteuerung (32) und eine Einrichtung (20) zur Erzeugung einer Übererregungszeit aufweist, die zum Lüften der Bremse eine die Phasenanschnittssteuerung (32) ansteuernde Schaltung (22) zur Erzeugung des Zündwinkels erst nach Ablauf einer vorbestimmten Übererregungszeit, während der die Magnetspule mit einer Übererregungsspannung erregt wird, ansteuert, und daß nach Ablauf der Übererregungszeit die Phasenanschnittssteuerung (32) eine Reduzierung der an der Magnetspule (2) anliegenden Leistung durch einen Phasenanschnitt bewirkt.

2. Federdruckbremse nach Anspruch 1, dadurch gekennzeichnet, daß die Übererregungszeit 100 - 300 msec beträgt.

3. Federdruckbremse nach Anspruch 1 oder 2, dadurch gekennzeichnet, daß die Phasenanschnittssteuerung (32) einen halbgesteuerten Brückengleichrichter (28 bis 31) aufweist.

4. Federdruckbremse nach einem der Ansprüche 1 bis 3, dadurch gekenzeichnet, daß bei Verwendung einer vorbestimmten Magnetspule (2) die Phasenanschnittssteuerung (32) an die jeweilige Netzspannung angepaßt ist.

5. Federdruckbremse nach einem der Ansprüche 1 bis 3, dadurch gekennzeichnet, daß bei Verwendung einer vorbestimmten Phasenanschnittssteuerung (32) die Magnetspule (2) an die jeweilige Netzspannung angepaßt ist.

6. Federdruckbremse nach einem der Ansprüche 1 bis 5, dadurch gekennzeichnet, daß die Stromzuführung zur Magnetspule (2) durch das Lagerschild geführt ist, an das die Federdruckbremse angeflanscht ist.

## Claims

1. Electromagnetically liftable spring-loaded brake
- having a fixed field spool housing (1) disposed concentrically to the shaft to be braked with an annular magnetic coil (2) therein, also disposed concentrically to the shaft,
- having a friction lining rotor (5) connected non-rotatably but axially slidably to the shaft to be braked via a hub (7),
- having a radially extending armature disc (4) disposed non-rotatably but axially slidably axially between the friction lining rotor (5) and the field spool housing (1),
- having pressure springs (3) disposed in the field spool housing (1), which act axially upon the armature disc (4) against the force of the magnetic coil (2) in the direction of the friction lining rotor in order, when the magnetic coil is currentless, to press the friction lining for braking against a shaft housing or end shield to which the field spool housing (1) is fixed,
- and having an electric control circuit (10) for the magnetic coil (2) for actuating same when the brake is lifted with a power which is much greater than when the brake is held in the released position,
characterised in that the control circuit (10) has phase control (32) and a device (20) for generating an overexcitation time which, for lifting the brake, actuates a circuit which actuates the phase control (32) in order to generate the ignition angle only when a specified overexcitation time has elapsed, during which the magnetic coil is excited with an overexcitation voltage, and in that at the end of the overexcitation time the phase control (32) effects a reduction in the level of power at the magnetic coil (2).

2. Spring-loaded brake according to claim 1, characterised in that the overexcitation time is 100 - 300 msec.

3. Spring-loaded brake according to claim 1 or 2, characterised in that the phase control (32) has a partially controlled bridge rectifier (28 to 31).

4. Spring-loaded brake according to one of claims 1 to 3, characterised in that when a predetermined magnetic coil (2) is used, the phase control (32) is adapted to the respective mains voltage.

5. Spring-loaded brake according to one of claims 1 to 3, characterised in that when a predetermined phase control (32) is used, the magnetic coil (2) is adapted to the respective mains voltage.

6. Spring-loaded brake according to one of claims 1 to 5, characterised in that the current supply to the magnetic coil (2) passes through the end shield to which the spring-loaded brake is flanged.

## Revendications

1. Frein à pression de ressort pouvant être desserré par voie électromagnétique,
- comportant un boîtier de support de bobine (1) fixe agencé de façon concentrique par rapport à l'arbre à freiner, comprenant à l'intérieur une bobine magnétique annulaire (2) qui est également agencée de façon concentrique par rapport à l'arbre,
- comportant un rotor à garniture de friction (5) relié de façon rigide en rotation via un moyeu (7) à l'arbre à freiner, mais mobile en direction axiale,
- comportant un disque d'armature (4) s'étendant radialement, agencé axialement de façon à ne pas tourner entre le rotor à garniture de friction (5) et le boîtier de support de bobine (1), mais mobile en direction axiale,
- comportant des ressorts de pression (3) agencés dans le boîtier de support de bobine (1), qui sollicitent le disque d'armature (4) à l'encontre de la force de la bobine magnétique (2) axialement en direction du rotor à garniture de friction, afin de presser, lorsque la bobine magnétique est sans courant, la garniture de friction pour le freinage contre un boîtier de l'arbre ou contre un flasque sur lequel est fixé le boîtier de support de bobine (1),
- comportant un circuit électrique de commande (10) pour la bobine magnétique (2) pour commander celle-ci lors du desserrage du frein, avec une puissance qui est fortement augmentée par rapport au maintien normal du frein dans la position desserrée,
caractérisé en ce que le circuit de commande (10) présente une commande à découpe de phase (32) et un dispositif (20) pour produire une durée de surexcitation, qui commande, pour le desserrage du frein, un circuit (22) qui est destiné à la production de l'angle d'allumage et qui pilote la commande à découpe de phase (32), uniquement après écoulement d'une durée de surexcitation prédéterminée, pendant laquelle la bobine magnétique est excitée avec une tension de surexcitation, et en ce qu'après écoulement de la durée de surexcitation, la commande à découpe de phase (32) provoque une réduction de la puissance appliquée dans la bobine magnétique (2) par une découpe de phase.

2. Frein à pression de ressort selon la revendication 1, caractérisé en ce que la durée de surexcitation s'élève à 100 à 300 msec.

3. Frein à pression de ressort selon l'une ou l'autre des revendications 1 et 2, caractérisé en ce que la commande à découpe de phase (32) présente un redresseur à pont (28 à 31) semi-commandé.

4. Frein à pression de ressort selon l'une quelconque des revendications 1 à 3, caractérisé en ce que lors de l'utilisation d'une bobine magnétique (2) prédéterminée, la commande à découpe de phase (32) est adaptée à la tension de réseau respective.

5. Frein à pression de ressort selon l'une quelconque des revendications 1 à 3, caractérisé en ce que lors de l'utilisation d'une commande à découpe de phase (32) prédéterminée, la bobine magnétique (2) est adaptée à la tension de réseau respective.

6. Frein à pression de ressort selon l'une quelconque des revendications 1 à 5, caractérisé en ce que l'amenée du courant à la bobine magnétique (2) est guidée à travers le flasque sur lequel le frein à pression de ressort est bridé.
